# EUROPEAN PATENT SPECIFICATION

(11) **EP 2 925 898 B1**
(45) Date of publication and mention of the grant of the patent: **05.10.2016**
(21) Application number: 13799301.0
(22) Date of filing: 03.12.2013
(51) Int. Cl.: C22C 38/00, C21D 8/04, C22C 38/14, C22C 38/32

(54) **A COLD-ROLLED AND CONTINUOUSLY ANNEALED HIGH STRENGTH STEEL STRIP OR SHEET HAVING A GOOD DEEP-DRAWABILITY AND A METHOD FOR PRODUCING SAID STEEL STRIP OR SHEET**
KALTGEWALZTER, KONTINUIERLICH VERGÜTETER HOCHFESTER PERLITFREIER STAHLSTREIFEN BZW. STAHLBLECH MIT GUTER TIEFZIEHBARKEIT UND VERFAHREN ZUR HERSTELLUNG DES STAHLSTREIFENS ODER STAHLBLECHS
FEUILLE OU BANDE D'ACIER À RÉSISTANCE ÉLEVÉE, EXEMPTE DE PERLITE, LAMINÉE À FROID ET RECUITE EN CONTINU AYANT UNE BONNE APTITUDE À L'EMBOUTISSAGE PROFOND ET PROCÉDÉ DE PRODUCTION DE LADITE FEUILLE OU BANDE D'ACIER

(30) Priority: 03.12.2012 EP 12195305; 20.06.2013 EP 13173109
(43) Date of publication of application: 07.10.2015
(73) Proprietor: Tata Steel Nederland Technology B.V., 1951 JZ Velsen-Noord (NL)
(72) Inventor: LIU, Cheng, NL-1970 CA IJmuiden (NL)
(74) Representative: Bodin, Andre
(86) International application number: PCT/EP2013/075431
(87) International publication number: WO 2014/086799

(56) References cited:
- EP-A1- 2 028 284
- EP-A1- 2 088 218
- EP-A1- 2 392 683
- JP-A- 2005 105 361

## Description

The invention relates to a cold-rolled and continuously annealed high strength steel strip or sheet having a good deep-drawability and a method for producing said steel strip or sheet.

Car manufacturers focus the main design criteria of a modern car on reduced weight and high safety in order to fulfil the customer's expectations and the legal requirements and standards. In this context, new steel grades have been developed not only for weight saving but also to improve crash safety of vehicles. These steels combine an increased formability with a high strength level at a wide strain rate spectrum. Advanced high strength steels, among them especially dual phase and TRIP steels, feature promising results in this field, while their extraordinary mechanical properties can be tailored and adjusted by alloying and processing. Different phases with a wide variety of strength levels together with an extraordinary fine microstructure contribute to the excellent cold formability and crash behaviour of AHSS.

AHSS are multiphase steels which contain phases like martensite, bainite and retained austenite in quantities sufficient to produce unique mechanical properties. Compared to conventional high strength steels, AHSS exhibit higher strength values or a superior combination of high strength with good formability (Bleck, W.; Phiu-On, K., Grain Refinement and Mechanical Properties in Advanced High Strength Sheet Steels, HSLA Steels 2005, Fifth International Conference on HSLA Steels, 08-10.11.2005, Sanya, Hainan, China). In principle one can distinguish four types of AHSS:
- Dual phase: microstructure comprising ferrite and 5-30% martensite
- Transformation Induced Plasticity steels with a microstructure of ferrite, bainite and retained austenite
- PM: partly or fully martensitic steels
- Complex Phase steels with a mixture of strengthened ferrite, bainite and martensite.

Although these advanced high strength steel sheets have excellent strength and formability in terms of the strength-ductility relationship, it is known that these AHSS suffer from a low r-value and therefore a poor deep drawability. For complex automotive stamped parts, the deep drawability can be critical.

EP 2 460 903 discloses a high strength, cold rolled steel for press forming used in automobiles.

It is an object of this invention to provide a cold-rolled and annealed high strength steel with improved deep drawability.

It is another object of the invention to provide a cold-rolled and annealed high strength steel with an improved r-value while keeping the excellent strength-ductility relationship.
One or more of these objects can be reached by providing a high strength steel strip or sheet comprising, in weight percent,
- C: 0.01 to 0.05%;
- Mn: 1.0 to 3.0%;
- Cr: 0.005 to 1.0%;
- P: 0.005 to 0.1%;
- Al_sol: 0.01 to 1.0%;
- Si: 0.01 to 1.0%;
- Ti: 0.005 to 0.05%.
- B: 0.0005 to 0.005%;
- S: 0.03% or less;
- N: 0.002 to 0.01%;
- Cu: 0.8% or less;
- Ni: 0.8% or less;
wherein:
a). -0.005% ≤ (Ti-(48/14)*N) ≤ 0.02%, and
b1). if (N-(14/48)*Ti) is positive then (0.005% ≤ C-(12/93)*Nb ≤ 0.03%) AND (0.0005% ≤ B-(11/14)*(N-(14/48)*Ti) ≤ 0.005%); or
b2). if (N-(14/48)*Ti) is negative then 0.005% ≤ C-(12/93)*Nb-(12/48)*(Ti-(48/14)*N-(96/32)*S) ≤ 0.03%;
the steel also comprising one or more of:
- Nb: 0.01 to 0.2%;
- Mo: 0.2 to 0.5%;
- V: 0.01 to 0.25%;
the steel optionally also comprising
- Ca: 0.0005 to 0.01%;
the remainder being Fe and inevitable impurities
Carbon is an important element for this invention. Carbon is effective in increasing strength and promote the formation of martensite. With a carbon content of less than 0.01%, formation of martensite is difficult, therefore 0.01% or more, preferably 0.015% or more carbon should be added. However, the carbon content exceeding 0.05% is detrimental for deep drawability. The upper limit of the carbon content is 0.05%.

The principle of the invention is that a balance was found between the deleterious effect of free interstitials on texture formation, and thereby on r-value, and the necessity of free interstitial carbon to induce the martensite formation to obtain the high tensile strength, and preferably the dual-phase type mechanical properties to result in a high strength steel with good r-values. So the invention revolves around controlling the free interstitial content by means of careful control of the chemistry to enable obtaining the right amount and the right kind of precipitates, and temperature control all along the processing route to form the precipitates in the hot-rolling stage and the favourable texture, and dissolve them again in the intercritical annealing stage, so as to enrich the austenitic grains with carbon and enable producing bainite, martensite or residual austenite in the final product, whilst simultaneously avoiding the destruction of the favourable texture components produced during the hot-rolling stage. These favourable texture components produced during the hot-rolling stage form the nuclei for the gamma-fibre texture development in the ferrite during recrystallisation annealing. Therefore it is important that as much of the texture components produced during the hot-rolling stage (and subsequently deformed during cold-rolling) is preserved to act as nucleus for the recrystallisation during the recrystallisation annealing. If the annealing temperature is too high, then too much ferrite transforms into austenite and too much of the favourable hot-band texture gets lost.

Manganese is effective in increasing strength and increasing quenching-hardenabililty of steel. However, too high Mn is detrimental for the r value. Therefore Mn should be from 1 to 3%; In a preferred embodiment the minimum Mn-content is 1.5%. In another preferred embodiment the maximum Mn-content is 2.5%.

Phosphorus is a very effective solid solution strengthening element. Below 0.005%, the strengthening effect is not obvious. On the other hand, more than 0.1% P causes P segregation at grain boundaries, induces secondary cold work embrittlement and reduces spot weldability. Thus the upper limit of P is 0.1%.

Boron is an important element in the invention. Boron has two roles in this invention: i) increasing quenching-hardenability and ii) reducing Mo- and P-segregation at grain boundaries. The B should be controlled between 0.0005 and 0.0050% (i.e. 5 to 50 ppm).

Titanium is also an important element in this invention. The amount of titanium should be strictly controlled. The main role of titanium in this steel is to fix nitrogen to TiN to make B available for quenching ability. If titanium is more than needed for fixing nitrogen, then the excessive titanium forms Ti₄S₂C₂ and TiC. Both Ti₄S₂C₂ and TiC are difficult to dissolve during the intercritical annealing which is necessary for enriching the austenite and obtaining the martensite in the final microstructure. Therefore titanium should be in the range: -0.005% ≤ (Ti-(48/14)*N) ≤ 0.02%. If there is no excess titanium then (N-(14/48)*Ti) is positive, and then not all nitrogen is bound to titanium and equation b1 should be used. If there is excess titanium then (N-(14/48)*Ti) is negative and then all nitrogen is considered bound to titanium and equation b2 must be used, and not b1. According to the invention the value for titanium is at most 0.05%, and preferably at most 0.03%.

Niobium is added to combine with carbon into NbC so as to reduce the carbon content in solid solution and to prevent pearlite formation in the hot-rolled strip. Both carbon in solid solution and pearlite are detrimental for a high r-value. The niobium content should be strictly controlled: too high a niobium content makes dissolution of NbC during intercritical annealing difficult, in which case there may not be enough carbon available to obtain martensite upon cooling the annealed steel. In addition, niobium is a very costly element. If the niobium content is too low, then the carbon concentration in solid solution remains too high to prevent formation of pearlite in the hot-rolled strip. The niobium content should meet the following condition: if there is no excess titanium then (N-(14/48)*Ti) is positive, and then 0.005% ≤ C-(12/93)*Nb ≤ 0.03%). If there is excess titanium then (N-(14/48)*Ti) is negative, and then 0.005% ≤ C-(12/93)*Nb-(12/48)*(Ti-(48/14)*N-(96/32)*S) ≤ 0.03%. Note that C-(12/93)*Nb-(12/48)*(Ti-(48/14)*N-(96/32)*S) denotes the carbon concentration in solid solution (C_free).

Molybdenum is added as an element, together with or without Nb, to combine carbon into MoₓC to reduce carbon in solid solution and to prevent pearlite formation in the hot-rolled strip. Because MoₓC is much less stable than NbC, much more molybdenum is needed to stabilized MoₓC than stoichiometricy necessary. In case without adding Nb, it was found that at least 0.2% molybdenum is needed to benefit significantly from its addition. Since molybdenum is a very costly element, a suitable maximum content from an economical perspective is 0.5%;
Vanadium is a carbide forming element. These carbides (VC) form in the hot rolled strip, usually during the phase transformation, and lead to a precipitation hardening of the microstructure. These precipitates are also beneficial in retaining the favourable ferrite texture during the intercritical annealing. The addition of vanadium is optional if molybdenum and/or niobium is present, but if vanadium is added then the inventors found that an amount between 0.005 and 0.25% is needed to benefit from its addition. A suitable minimum amount is 0.03%. If vanadium is added without also adding niobium or molybdenum, then a suitable minimum amount is 0.1% vanadium.

Aluminium is added as a solid strengthening element and can also be used to control the temperature for α-y transformation because it increases the Ar₁ temperature. However, too high aluminium deteriorates surface quality and reduces wettability of liquid Zn during hot dip galvanizing process. Therefore the aluminium content should be 1.0 or less.

Silicon is a solid strengthening element and retards pearlite transformation. The silicon content is preferably 0.01% or more, more preferably 0.05% or more. On the other hand, with the silicon content of over 1%, the surface quality of the steel strip or sheet deteriorates. Therefore the silicon content is preferably at most 1.0.

Nitrogen in solid solution potentially causes ageing and should therefore be as low as economically possible. To counteract the aging, titanium is added for fixing nitrogen as TiN. Up to 0.01% nitrogen is allowed.

Nickel and copper may be used up to at most 0.8%. In an embodiment it is preferable from a cost perspective, and in some cases also corrosion or surface condition perspective, to keep the amounts of these two elements to impurity level. The chromium level plays a role in obtaining the ferritic matrix and is therefore between 0.005 and 1%. In a preferred embodiment the minimum Cr-content is 0.35%. Above these levels it becomes easier to maintain the ferritic matrix because of the ferrite stabilising effect of Cr.

The steel is preferably calcium treated. The chemical composition may therefore also contain calcium in an amount consistent with a calcium treatment.

In an embodiment of the invention the steel strip or sheet comprises a microstructure which is pearlite-free and which microstructure comprises ferrite as a matrix phase and one or more second phases such as martensite, residual austenite and/or bainite. With pearlite-free it is meant that it is intended to have no pearlite present, although the presence of minute amounts of pearlite will not adversely affect the properties. The presence of minute amounts of pearlite will only reduce the amount of carbon needed to produce the desired second phase(s), and therefore it is preferable that no pearlite is present.

In an embodiment of the invention the nitrogen content of the steel strip is at most 0.005% (50 ppm). At these nitrogen contents any potentially detrimental effect on the ductility of the steel is prevented.

In a preferable embodiment the steel strip or sheet according to the invention has a tensile strength of at least 450 MPa, and preferably of at least 500 MPa, and/or average r-value above 1.2, and preferably of above 1.25. These mechanical properties provide these advanced high strength steel sheets with excellent strength and formability in terms of the strength-ductility relationship, and good deep drawability. For complex automotive stamped parts, this combination is very important.

According to a second aspect, a method for producing a high strength steel with improved r-value is provided comprising the steps of:
- providing a steel slab or thick strip by:
   o continuous casting, or
   o by thin slab casting, or
   o by belt casting, or
   o by strip casting;
      said steel comprising, in weight percent,
      - C: 0.01 to 0.05%;
      - Mn: 1.0 to 3.0%;
      - Cr: 0.005 to 1.0%;
      - P: 0.005 to 0.1%;
      - Al_sol: 0.01 to 1.0%;
      - Si: 0.01 to 1.0%;
      - Ti: 0.005 to 0.05%.
      - B: 0.0005 to 0.005%;
      - S: 0.03% or less;
      - N: 0.002 to 0.01%;
      - Cu: 0.8% or less;
      - Ni: 0.8% or less;
      wherein:
      a). -0.005% ≤ (Ti-(48/14)*N) ≤ 0.02%, and
      b1). if (N-(14/48)*Ti) is positive then (0.005% ≤ C-(12/93)*Nb ≤ 0.03%) **AND** (0.0005% ≤ B-(11/14)*(N-(14/48)*Ti) ≤ 0.005%); or
      b2). if (N-(14/48)*Ti) is negative then 0.005% ≤ C-(12/93)*Nb-(12/48)*(Ti-(48/14)*N-(96/32)*S) ≤ 0.03%;
      the steel also comprising one or more of:
      - Nb: 0.01 to 0.2%;
      - Mo: 0.2 to 0.5%;
      - V: 0.01 to 0.25%;
      the steel optionally also comprising
      - Ca: 0.0005 to 0.01%;
   the remainder being Fe and inevitable impurities;
- optionally followed by reheating the slab or strip to a temperature sufficiently high to dissolve all carbide or, in case of a thin slab cast or strip-cast to be rolled immediately after casting;
- hot-rolling the slab or thick strip to a hot-rolled strip by hot-rolling at a finishing temperature above Ar₃;
- coiling the hot-rolled strip at a coiling temperature of between 500 and 750°C so as to promote carbide precipitation, NbC or MoₓC, or VC, in the hot-rolled strip;
- pickling the cooled hot-rolled strip;
- cold-rolling the hot-rolled strip with a reduction in thickness of between 50 and 90%;
- continuous inter-critical annealing of the cold-rolled strip by reheating the strip to a temperature between Ac₁ and Ac₃, holding the strip between Ac₁ and Ac₃ for at most 600 seconds to obtain a microstructure comprising at most 80% austenite, preferably at most 70%, followed by cooling from the holding temperature to an intermediate temperature of 350-500°C at a cooling rate of between 1 and 100°C/s and followed by
   a. cooling without delay from the intermediate temperature to a temperature between ambient temperature and 200°C at a cooling rate of between 1 and 100°C/s, or
   b. holding the strip at the intermediate temperature of between 350 and 500°C for a period of time which is not more than 600s and then followed by cooling from the intermediate temperature to a temperature between ambient temperature and 200°C at a cooling rate of between 1 and 200°C/s, ;
wherein the final microstructure of the strip after continuous annealing is a pearlite-free microstructure comprising ferrite and one or more second phases such as martensite, residual austenite and/or bainite in a ferrite matrix. With pearlite-free it is meant that it is intended to have no pearlite present, although minute amounts of pearlite will not adversely affect the properties. The presence of minute amounts of pearlite will only reduce the amount of carbon needed to produce the desired second phase(s).

The amount of ferrite, which already has a favourable crystallographic texture that transforms into austenite during the intercritical annealing should be not be too high and therefore the annealing temperature should not be too high. Too high an annealing temperature will also reduce the average carbon content in the austenite formed during heating and annealing, and therefore the critical cooling rate for the austenite transforming to the desired microstructure would need to be higher as well. The strip is cooled fastly after the intercritical annealing, at a cooling rate exceeding the critical cooling rate, so that formation of martensite from the austenite is promoted and the formation of pearlite is prevented. As a result of the fast cooling a part of the austenite, enriched in carbon, will transform into the desired second phase (martensite, bainite) or stay untransformed as retained austenite. The occurrence of the latter depends on the degree of enrichment of the austenite and the presence of any austenite stabilising alloying elements such as manganese and nickel. The cooling after intercritical annealing has to be fast enough to induce the formation of the desired second phase as martensite or bainite i.e. it has to exceed the critical cooling rate. The fast cooling is continued to an intermediate temperature of between 350 and 500°C. At that stage of the process the choice is to continue cooling to a temperature between 200°C and ambient temperature (for instance on a continuous annealing line without an overageing section) at a cooling rate CR2, or to hold the strip at the intermediate temperature for a short period of time (for instance on a continuous annealing line with an overageing section), and/or to subject the strip to hot dip galvanizing by dipping the strip in a bath of molten metal, usually a zinc bath or zinc based alloy, followed by cooling at a cooling rate CR3. The zinc based alloy may be alloyed with aluminium and/or magnesium such as Magizinc^{®}. The strip may also be coated by means of an electrocoating process such as electrogalvanizing. In that case the cooling does not need to halt at the intermediate temperature but the cooling can be continued without delay to a temperature between 200°C and ambient temperature. Although the cooling rate is prescribed by the fact that it must be sufficiently high to achieve the desired microstructure, the inventors found that a cooling rate of between 1-200°C/s, and preferably of at least 50 and/or at most 150°C/s enables to achieve this aim. A cooling rate of at most 100°C/s was found to be adequate.

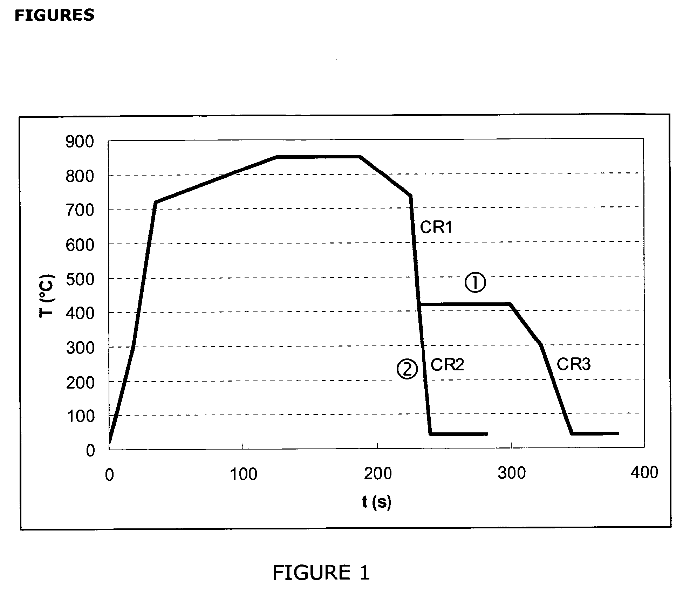

For the sake of avoiding misunderstanding: upon reaching the intermediate temperature of between 350 and 500°C three options are available:
1. The strip is held at a temperature between 350 and 500°C for a period of time (overageing), and this period of time is not more than 600 seconds, and preferably not more than 300 seconds (see ① in figure 1) or
2. The strip is not held at a temperature between 350 and 500°C for a period of time and the cooling is continued without delay to a temperature to between ambient temperature and 200°C (see ② in figure 1).
3. Hot dip galvanising the strip by dipping the strip in a molten zinc or molten zinc-alloy bath. This can be combined with either option 1 or 2.

Figure 1 shows an embodiment of the continuous annealing thermal cycle in which several different cooling rates can be distinguished. It should be noted here that the heating to the annealing temperature can also be performed using a constant heating rate from ambient temperatures to the soaking temperature between Ar₁ and Ar₃. Also the cooling from the soaking temperature to the intermediate temperature, and the cooling from the intermediate temperature to the final temperature, which both contain two different cooling rates in figure 1, can also be performed using one or more than two cooling rates, provided the cooling rate is always fast enough to avoid the formation of pearlite. So figure 1 is not a limiting embodiment. In an embodiment of the invention the hot-rolled strip is coiled at a temperature of between 500 and 750°C. The coiling temperature should not be chosen too low. Too low a coiling temperature will prevent precipitation of NbC and/ or MoₓC, In addition the formation of lower bainite structures (forming between around 250 to 400°C) in the hot-rolled coil should be prevented (upper bainite structures forming around between 550 and 400°C are considered allowable. The coiling temperature should not be chosen too high because too high a coiling temperature results in coarser carbides which will not dissolve easily during continuous annealing.

In an embodiment of the invention the strip during continuous intercritical annealing is held between Ac₁ and Ac₃ to obtain a microstructure comprising at most 80 vol.% austenite, preferably at most 70 vol.%. By keeping the amount of austenite down, the amount of ferrite grains transforming is kept down, and the enrichment in carbon of the austenite is increased, thereby maximising the chances of obtaining the desired second phase(s) upon cooling and retaining as much as possible of the favourable crystallographic texture of the pre-existing ferrite. A suitable minimum austenite content during annealing is 10 vol.%. Preferably the austenite content during annealing is at least 20 and/or at most 70 vol.%.

In an embodiment of the invention the reheating temperature of the slab or strip is at least 1100°C, preferably at least 1150°C and more preferably at least 1200°C. This high temperature ensures that as much as possible carbide formed during the cooling down of the cast slab is dissolved. When hot-rolling in a thin slab-casting & direct rolling facility such as a CSP or a strip-casting & direct rolling facility it is important that the temperature of the cast thin slab or strip does not drop to a level that coarse carbide precipitation starts. Therefore the homogenisation temperature between casting and rolling must be such that most of the carbon stays in solid solution. For this purpose it is preferable that the homogenisation temperature of the precursor material is at least 1100°C, preferably at least 1125°C. A suitable maximum homogenisation temperature would be 1175, preferably 1150°C.

In an embodiment of the invention the heating rate to the holding temperature during intercritical annealing is between 1 to 50°C/s.

In an embodiment of the invention the strip is provided with a metallic coating by hot dip coating the continuously annealed strip or electrogalvanising.

In an embodiment of the invention the hot-rolling finishing temperature is at least Ar₃+20°C. This ensures that the strip is finished while still being austenitic and austenitic finishing hot-rolling is important to create a fine equiaxed structure of the hot-rolled strip.

The invention is now further explained by means of the following, non-limitative examples and the figures 1 to 5
Figure 1 shows a schematic drawing of the different annealing cycles embodied in this invention.
Figure 2 shows the microstructure of the hot rolled strip of steels 1 (A), 5 (B) and 6 (C) and after continuous annealing and cooling of steels 1 (D), 5 (E) and 6 (F) according to schedule ①.
Figure 3 shows the Orientation Distribution Function for section at Φ₂=45° for steels 1, 4, 5 and 6 after continuous annealing.
Figure 4 shows the volume fraction of grains having a defined crystallographic orientation, as determined from the ODF, showing an increase in the gamma fibre orientations at the expense of the alfa fibre orientations for steels 4, 5 and 6.
Figure 5 shows the r-value as calculated from the ODF, again showing the marked improvement of steels 4 to 6 over steels 1 and 2.

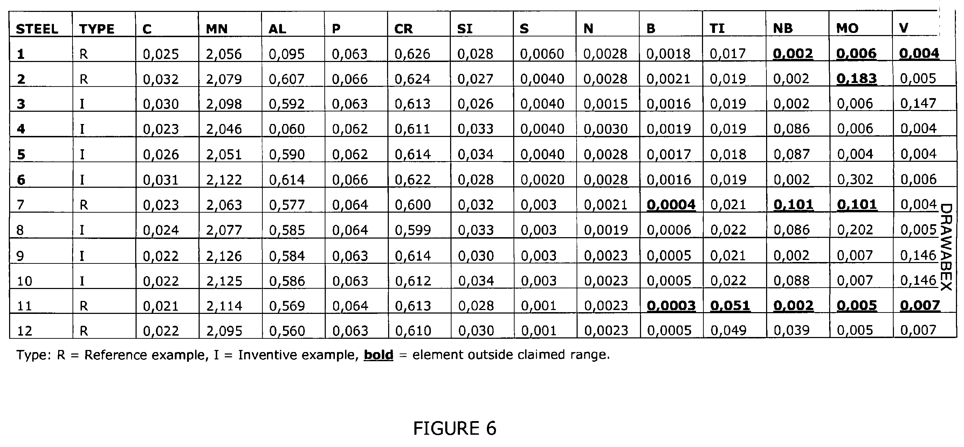

Figure 6 shows the composition of the used steels. These are compositions that can be used for producing cold-rolled and continuously annealed DP500. Steel 1 and 2 are reference steels and 3, 4, 5 and 6 are steels according to the invention. All values in Figure 6 are in wt.%. The niobium contents of 0.002 and below, molybdenum of 0.006 and below and vanadium of 0.006 and below in Figure 6 are considered impurities.

From these compositions hot-rolled strips were produced at a thickness of 4 mm, finished at a temperatures at least 10°C above the corresponding Ar3 temperature, and coiled at a temperature of 700°C. The microstructure after hot-rolling consisted of pearlite-free ferrite for the invented steels (3, 4, 5 and 6) and ferrite and pearlite for the reference steels (1 and 2). These hot-rolled strips were subsequently pickled and cold-rolled to 1 mm (i.e. 75% cold reduction).

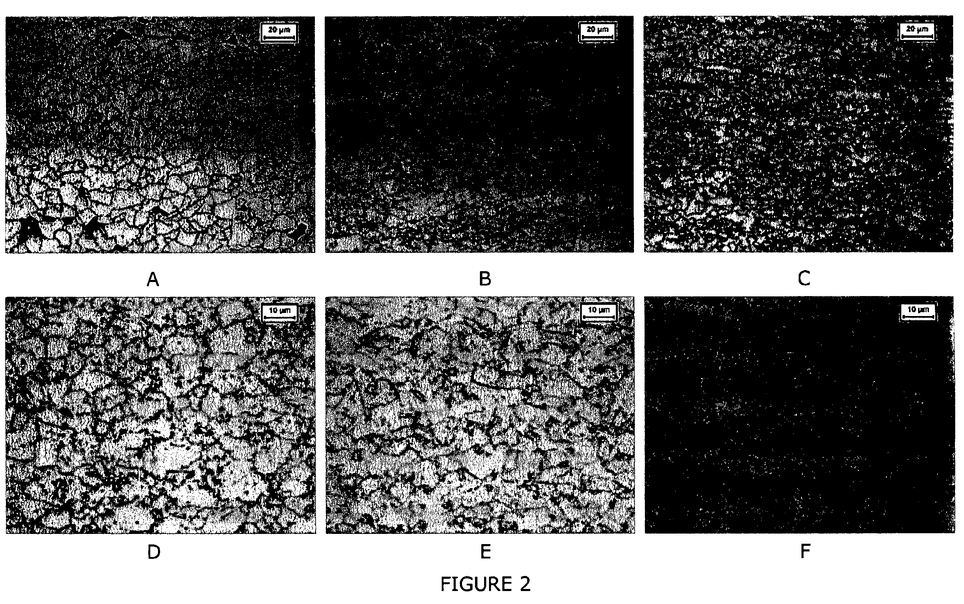

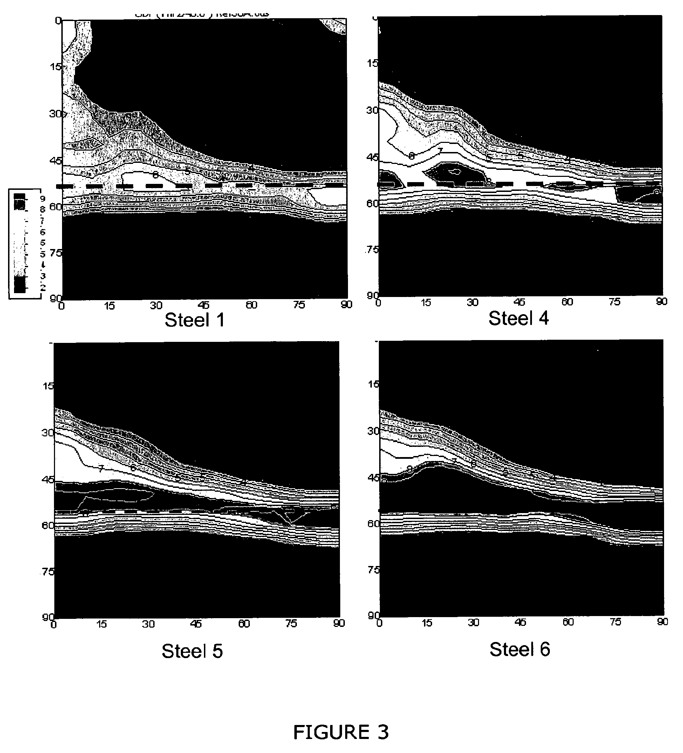

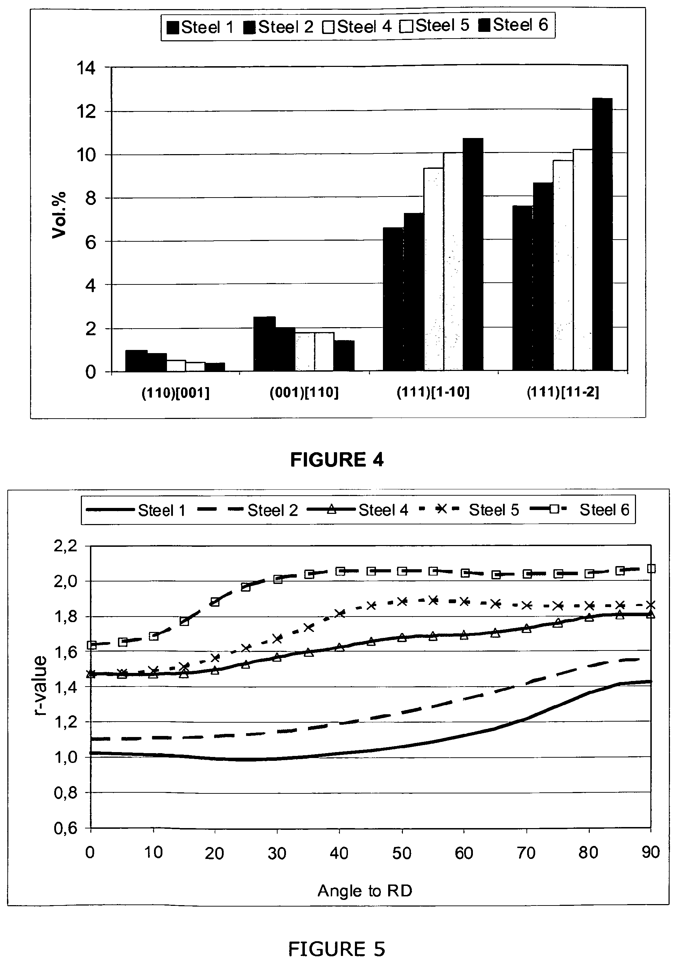

The continuous annealing was performed as follows: heating to 720°C at 23°C/s, then slow heating to a soaking temperature between Ac1 and Ac3 to achieve the desired amount of austenite in the steel at 2.2°C/s, the soaking temperatures ranging from 820 to 895°C, depending on the steel grade and the targeted amount of austenite, soaking for 51 seconds, then slow cooling to 765°C at 3.9°C/s, then fast cooling to 420°C at 69°C/s, holding at 420°C for 54 seconds and followed by hot dip galvanising, after galvanising cooling to 25°C at 12°C/s. The microstructure of the continuously annealed steel is presented in figure 2 and the crystallographic texture in figure 3 (ODF section at Φ₂=45°). Figure 3 reveals a well developed γ-fibre for the invented steels (steel 4, 5, and 6) in comparison to the reference steel (steel 1). The invented steels have a much stronger (111)-texture than the reference steel. The difference in texture in figure 3 is reflected in the r-values of the specimens (see table 1 and figure 5).

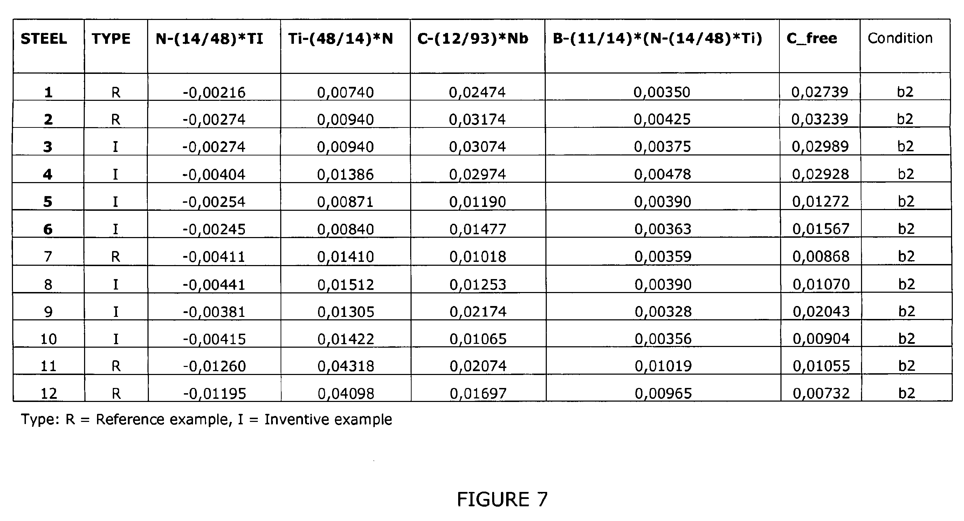

The results presented in Figure 7 show that a combination of chemistry, processing and precipitate conditions is required to achieve to good balance between properties and texture (r-values). All steels in figure 7 satisfy condition b2, but still the reference examples (R) do not perform as well as the inventive examples (I) in terms of properties, particularly the r-values.

The tensile properties and the r-value were determined in accordance with EN10002 and ISO10113 on a tensile specimen of 50mm gauge length. The average r-value is determined by ¼ (r₀+2·r₄₅+r₉₀). The r90 was determined by measuring the thickness and the width of a strip before and after 15% uniaxial stretching.

**Table 1: Mechanical properties of steels in the final condition.**

| **Steel** | **Direction** | **Rp** | **Rm** | **A** | **r** | **n** |
|---|---|---|---|---|---|---|
| | **to RD** | **MPa** | **MPa** | **%** | **(-)** | **(-)** |
| 1 | 0 | 284 | 521 | 26,0 | 0,93 | 0,182 |
| | 45 | 295 | 526 | 26,8 | 0,87 | 0,180 |
| | 90 | | | | 1,02 | |
| 2 | 0 | 300 | 559 | 24,7 | 0,92 | 0,175 |
| | 45 | 302 | 563 | 20,8 | 1,04 | 0,175 |
| | 90 | | | | 1,01 | |
| 3 | 0 | 312 | 533 | 24,5 | 1,10 | 0,150 |
| | 45 | 310 | 531 | 25,0 | 1,36 | 0,153 |
| | 90 | | | | 1,40 | |
| 4 | 0 | 310 | 516 | 22,3 | 1,15 | 0,164 |
| | 45 | 307 | 505 | 26,3 | 1,36 | 0,165 |
| | 90 | | | | 1,26 | |
| 5 | 0 | 334 | 533 | na | 0,96 | 0,145 |
| | 45 | 351 | 547 | 23,4 | 1,43 | 0,144 |
| | 90 | | | | 1,40 | |
| 6 | 0 | 335 | 549 | 23,6 | 1,12 | 0,154 |
| | 45 | 336 | 537 | 22,5 | 1,79 | z52 |
| | 90 | | | | 1,58 | |
| 7 | 0 | 315 | 520 | 24,2 | 1,03 | 0,160 |
| | 45 | 330 | 528 | 10,9 | 0,86 | |
| 8 | 0 | 328 | 536 | 24,2 | 1,16 | 0,150 |
| | 45 | 321 | 530 | 16,8 | 1,04 | |
| 9 | 0 | 287 | 544 | 23,7 | 1,12 | 0,169 |
| | 45 | 298 | 548 | 19,4 | 1,12 | |
| 10 | 0 | 311 | 525 | 23,9 | 1,34 | 0,158 |
| | 45 | 328 | 535 | 15,4 | 1,17 | |
| 11 | 0 | 290 | 497 | 23,7 | 0,96 | 0,175 |
| | 45 | 310 | 524 | 17,2 | 0,88 | |
| 12 | 0 | 321 | 516 | 19,0 | 1,08 | 0,151 |
| | 45 | 335 | 534 | 16,3 | 1,06 | |

## Claims

1. A cold-rolled and continuously annealed high strength steel strip or sheet having a good deep drawability comprising, in weight percent,
• C: 0.01 to 0.05%;
• Mn: 1.0 to 3.0%;
• Cr: 0.005 to 1.0%;
• P: 0.005 to 0.1%;
• Al_sol: 0.01 to 1.0%;
• Si: 0.01 to 1.0%;
• Ti: 0.005 to 0.05%.
• B: 0.0005 to 0.005%;
• S: 0.03% or less;
• N: 0.002 to 0.01%;
• Cu: 0.8% or less;
• Ni: 0.8% or less;
wherein:
a). -0.005% ≤ (Ti-(48/14)*N) ≤ 0.02%, and
b1). if (N-(14/48)*Ti) is positive then (0.005% ≤ C-(12/93)*Nb ≤ 0.03%) **AND** (0.0005% ≤ B-(11/14)*(N-(14/48)*Ti) ≤ 0.005%); or
b2). if (N-(14/48)*Ti) is negative then 0.005% ≤ C-(12/93)*Nb-(12/48)*(Ti-(48/14)*N-(96/32)*S) ≤ 0.03%;
the steel also comprising one or more of:
• Nb: 0.01 to 0.2%;
• Mo: 0.2 to 0.5%;
• V: 0.01 to 0.25%;
the steel optionally also comprising
• Ca: 0.0005 to 0.01%;
the remainder being Fe and inevitable impurities.

2. Steel strip or sheet according to claim 1 wherein titanium is 0.005 to 0.03%.

3. Steel strip or sheet according to claim 1 or 2 wherein the microstructure is pearlite-free and wherein the microstructure comprises ferrite as a matrix phase and one or more second phases such as martensite, residual austenite and/or bainite.

4. Steel strip or sheet according to any one of the preceding claims wherein nitrogen is at most 0.005% (50 ppm).

5. Steel strip or sheet according to any one of the preceding claims having a tensile strength of at least 450 MPa, and preferably of at least 500 MPa

6. Steel strip or sheet according to any one of the preceding claims having an average r-value above 1.2, preferably above 1.25.

7. Steel product produced by forming or stamping the steel strip or sheet according to any one of claims 1 to 6 into a shape suitable for application in the production of a car.

8. Method for producing a cold-rolled and continuously annealed high strength steel strip or sheet with a ferritic microstructure as a matrix and martensite and/or bainite as second phase(s) having a good deep drawability comprising the steps of:
providing a steel slab or thick strip by:
o continuous casting, or
o by thin slab casting, or
o by belt casting, or
o by strip casting;
the steel comprising, in weight percent,
• C: 0.01 to 0.05%;
• Mn: 1.0 to 3.0%;
• Cr: 0.005 to 1.0%;
• P: 0.005 to 0.1%;
• Al_sol: 0.01 to 1.0%;
• Si: 0.01 to 1.0%;
• Ti: 0.005 to 0.05%.
• B: 0.0005 to 0.005%;
• S: 0.03% or less;
• N: 0.002 to 0.01%;
• Cu: 0.8% or less;
• Ni: 0.8% or less;
wherein:
a). -0.005% ≤ (Ti-(48/14)*N) ≤ 0.02%, and
b1). if (N-(14/48)*Ti) is positive then (0.005% ≤ C-(12/93)*Nb ≤ 0.03%) **AND** (0.0005% ≤ B-(11/14)*(N-(14/48)*Ti) ≤ 0.005%); or
b2). if (N-(14/48)*Ti) is negative then 0.005% ≤ C-(12/93)*Nb-(12/48)*(Ti-(48/14)*N-(96/32)*S) ≤ 0.03%;
the steel also comprising one or more of:
• Nb: 0.01 to 0.2%;
• Mo: 0.2 to 0.5%;
• V: 0.01 to 0.25%;
the steel optionally also comprising
• Ca: 0.0005 to 0.01%;
the remainder being Fe and inevitable impurities;
• optionally followed by reheating the steel slab or strip at a reheating temperature of at most 1250°C;
• hot-rolling the slab or thick strip to a hot-rolled steel strip and finishing the hot-rolling process at a finishing temperature of above the Ar₃-temperature of the steel;
• coiling the hot-rolled steel strip at a coiling temperature of between 500 and 750°C;
• cold-rolling the hot-rolled strip at a cold-rolling reduction of from 40 to 90% to produce a cold-rolled strip;
• annealing the cold-rolled strip in a continuous annealing process at a peak temperature between Ac₁ and Ac₃, holding the strip between Ac₁ and Ac₃ for at most 600 seconds to obtain a microstructure comprising at most 80% austenite followed by cooling from the holding temperature to an intermediate temperature of 350-500°C at a cooling rate (CR1) exceeding the critical cooling rate and followed by
a. cooling without delay from the intermediate temperature to a temperature between ambient temperature and 200°C at a cooling rate (CR2) exceeding the critical cooling rate, or
b. holding the strip at the intermediate temperature of between 350 and 500°C for a period of time which is not more than 600s followed by cooling to a temperature between ambient temperature and 200°C at a cooling rate (CR3) exceeding the critical cooling rate;
wherein the final microstructure of the strip after continuous annealing is a microstructure comprising ferrite as a matrix phase and one or more second phases such as martensite, residual austenite and/or bainite and wherein the final microstructure is pearlite-free.

9. Method according to claim 8 wherein the steel comprises 0.005 to 0.03% titanium.

10. Method according to claim 8 or 9 wherein the cooling rate from the holding temperature to the intermediate temperature (CR1) and/or the cooling rate (CR2 or CR3) from the intermediate temperature to the temperature between ambient temperature and 200°C is between 1 and 100°C/s.

11. Method according to any one of claims 8 to 10 wherein the heating rate to the holding temperature during intercritical annealing is between 1 to 40°C/s.

12. Method according to any one of claims 8 to 11 wherein the intercritically annealed strip is provided with a metallic coating by hot dip coating the intercritically annealed strip or electrogalvanising

13. Method according to any one of claims 8 to 12 wherein the finishing temperature for hot rolling is at least Ar₃+20°C.

14. Method according to any one of claims 8 to 13 wherein the cold-rolled strip after holding at the holding temperature during intercritical annealing is cooled to the intermediate temperature of between 350 and 500°C, at a cooling rate (CR1) of between 1 to 100°C/s.

15. Method according to any one of claims 8 to 14 wherein:
a. the cold-rolled strip after intercritical annealing is cooled from the intermediate temperature to ambient temperature without delay, preferably at a cooling rate (CR2) of between 1 to 100°C/s, or
b. the cold-rolled strip after intercritical annealing is held at the intermediate temperature for a period of at most 600 seconds and then cooled from the intermediate temperature to ambient temperature, preferably at a cooling rate (CR3) of between 1 to 100°C/s.

## Patentansprüche

1. Kaltgewalztes und durchlaufgeglühtes hochfestes Stahlband oder -blech mit einer guten Tiefziehfähigkeit aufweisend, in Gewichtsprozenten,
• C: 0.01 bis 0.05%;
• Mn: 1.0 bis 3.0%;
• Cr: 0.005 bis 1.0%;
• P: 0.005 bis 0.1%;
• Al-sol: 0.01 bis 1.0%;
• Si: 0.01 bis 1.0%;
• Ti: 0.005 bis 0.05%;
• B: 0.0005 bis 0.005%;
• S: 0.03% oder weniger;
• N: 0.002 bis 0.01%;
• Cu: 0.8% oder weniger;
• Ni: 0.8% oder weniger;
wobei:
a). -0.005% ≤ (Ti-(48/14)*N) ≤ 0.02%, und
b1). wenn (N-(14/48)*Ti) positiv ist, dann (0.005% ≤ C-(12/93)*Nb ≤ 0.03%) **UND** (0.0005% ≤ B-(11/14)*(N-(14/48)*Ti) ≤ 0.005%); oder
b2). wenn (N-(14/48)*Ti) negativ ist, dann 0.005% ≤ C-(12/93)*Nb-(12/48)*(Ti-(48/14)*N-(96/32)*S) ≤ 0.03%;
der Stahl auch aufweisend eines oder mehrere von:
• Nb: 0.01 bis 0.2%;
• Mo: 0.2 bis 0.5%;
• V: 0.01 bis 0.25%;
der Stahl optional auch aufweisend
• Ca: 0.0005 bis 0.01%;
wobei der Rest Fe und unvermeidbare Unreinheiten sind.

2. Stahlband oder -blech nach Anspruch 1, wobei Titan 0.005 bis 0.03% beträgt.

3. Stahlband oder -blech nach Anspruch 1 oder 2, wobei die Mikrostruktur perlitfrei ist und wobei die Mikrostruktur Ferrit als Matrixphase und eine oder mehrere zweite Phasen, wie beispielsweise Martensit, Restaustenit und/oder Bainit aufweist.

4. Stahlband oder -blech nach einem der vorhergehenden Ansprüche, wobei Stickstoff höchstens 0.005% (50 ppm) beträgt.

5. Stahlband oder -blech nach einem der vorhergehenden Ansprüche, mit einer Zugfestigkeit von mindestens 450 MPa und vorzugsweise von mindestens 500 MPa.

6. Stahlband oder -blech nach einem der vorhergehenden Ansprüche, mit einem durchschnittlichen r-Wert von über 1.2, vorzugsweise von über 1.25.

7. Stahlprodukt, erzeugt durch Umformen oder Pressen des Stahlbandes oder -bleches nach einem der Ansprüche 1 bis 6 in eine zur Anwendung in der Produktion eines Automobils geeigneten Form.

8. Verfahren zur Herstellung eines kaltgewalzten und durchlaufgeglühten hochfesten Stahlbandes oder -bleches mit einer ferritischen Mikrostruktur als Matrix und Martensit und/oder Bainit als Zweitphase(n) mit einer guten Tiefziehfähigkeit umfassend folgende Schritte:
Bereitstellen einer Stahlbramme oder eines dicken Bandes durch:
o Strangguss, oder
o durch Dünnbrammenguss, oder
o durch Bandgießen, oder
o durch Dünnbandgießen,
der Stahl in Gewichtsprozenten aufweisend
• C: 0.01 bis 0.05%;
• Mn: 1.0 bis 3.0%;
• Cr: 0.005 bis 1.0%;
• P: 0.005 bis 0.1%;
• Al_sol: 0.01 bis 1.0%;
• Si: 0.01 bis 1.0%;
• Ti: 0.005 bis 0.05%;
• B: 0.0005 bis 0.005%;
• S: 0.03% oder weniger;
• N: 0.002 bis 0.01%;
• Cu: 0.8% oder weniger;
• Ni: 0.8% oder weniger;
wobei
a). -0.005% ≤ (Ti-(48/14)*N) ≤ 0.02%, und
b1). wenn (N-(14/48)*Ti) positiv ist, dann (0.005% ≤ C-(12/93)*Nb ≤0.03%) **UND** (0.0005% ≤ B-(11/14)*(N-(14/48)*Ti) ≤ 0.005%); oder
b2). wenn (N-(14/48)*Ti) negativ ist, dann 0.005% ≤ C-(12/93)*Nb-(12/48)*(Ti-(48/14)*N-(96/32)*S) ≤ 0.03%, der Stahl auch aufweisend einen oder mehrere von:
• Nb: 0.01 bis 0.2%;
• Mo: 0.2 bis 0.5%;
• V: 0.01 bis 0.25%;
der Stahl optional auch aufweisend
• Ca: 0.0005 bis 0.01%;
wobei der Rest Fe und unvermeidbare Unreinheiten sind,
• optional gefolgt vom Nacherwärmen der Stahlbramme oder des Stahlbandes bei einer Nacherwärmungstemperatur von höchstens 1250°C,
• Warmwalzen der Bramme oder des dicken Bandes auf ein warmgewalztes Stahlband und Abschluss des Warmwalzverfahrens bei einer Endfertigungstemperatur von über der Ar₃-Temperatur des Stahls,
• Aufwickeln des warmgewalzten Stahlbandes bei einer Wickeltemperatur von zwischen 500 und 750°C.
• Kaltwalzen des warmgewalzten Bandes mit einer Kaltwalz-Reduktion von 40 bis 90 % zum Erzeugen eines kaltgewalzten Bandes;
• Glühen des kaltgewalzten Bandes in einem Durchlaufglühprozess bei einer Spitzentemperatur zwischen Ac₁ und Ac₃, Halten des Bandes zwischen Ac₁ und Ac₃ höchstens 600 Sekunden lang, um eine höchstens 80% Austenit aufweisende Mikrostruktur zu erhalten, gefolgt von einem Abkühlen von der Haltetemperatur auf eine Zwischentemperatur von 350-500°C bei einer die kritische Abkühlgeschwindigkeit überschreitende Abkühlgeschwindigkeit (CR1) und gefolgt von
a. Abkühlen ohne Verzögerung von der Zwischentemperatur auf eine Temperatur zwischen Raumtemperatur und 200°C bei einer die kritische Abkühlgeschwindigkeit überschreitende Abkühlgeschwindigkeit (CR2) oder
b. Halten des Bandes bei der Zwischentemperatur von zwischen 350 und 500°C während eines Zeitraums von nicht mehr als 600 Sek. gefolgt von einem Abkühlen auf eine Temperatur zwischen Raumtemperatur und 200°C bei einer die kritische Abkühlgeschwindigkeit überschreitende Abkühlgeschwindigkeit (CR3),
wobei die endgültige Mikrostruktur des Bandes nach dem Durchlaufglühen eine Ferrit als Matrixphase und eine oder mehrere Zweitphasen, wie beispielsweise Martensit, Restaustenit und/oder Bainit, aufweisende Mikrostruktur ist und wobei die endgültige Mikrostruktur perlitfrei ist.

9. Verfahren nach Anspruch 8, wobei der Stahl 0.005 bis 0.03% Titan aufweist.

10. Verfahren nach Anspruch 8 oder 9 wobei die Abkühlgeschwindigkeit von der Haltetemperatur auf die Zwischentemperatur (CR1) und/oder die Abkühlgeschwindigkeit (CR2 oder CR3) von der Zwischentemperatur auf die Temperatur zwischen Raumtemperatur und 200°C zwischen 1 und 100°C/s beträgt.

11. Verfahren nach einem der Ansprüche 8 bis 10, wobei die Aufheizgeschwindigkeit auf die Haltetemperatur während des interkritischen Glühens zwischen 1 bis 40°C/s beträgt.

12. Verfahren nach einem der Ansprüche 8 bis 11, wobei das interkritisch geglühte Band mit einer metallischen Schicht durch Schmelztauchen des interkritisch geglühten Bandes oder Elektrogalvanisieren versehen ist.

13. Verfahren nach einem der Ansprüche 8 bis 12, wobei die Endfertigungstemperatur für Warmwalzen mindestens Ar₃+20°C ist.

14. Verfahren nach einem der Ansprüche 8 bis 13, wobei das kaltgewalzte Band nach dem Halten bei der Haltetemperatur während des interkritischen Glühens auf die Zwischentemperatur von zwischen 350 und 500°C mit einer Abkühlgeschwindigkeit (CR1) von zwischen 1 bis 100°C/s abgekühlt wird.

15. Verfahren nach einem der Ansprüche 8 bis 14, wobei:
a. das kaltgewalzte Band nach dem interkritischen Glühen von der Zwischentemperatur auf Raumtemperatur ohne Verzögerung, vorzugsweise mit einer Abkühlgeschwindigkeit (CR2) von 1 bis 100°C/s abgekühlt wird, oder
b. das kaltgewalzte Band nach dem interkritischen Glühen bei der Zwischentemperatur für einen Zeitraum von höchstens 600 Sekunden gehalten und anschließend von der Zwischentemperatur auf Raumtemperatur, vorzugsweise mit einer Abkühlgeschwindigkeit (CR3) von zwischen 1 bis 100°C/s abgekühlt.

## Revendications

1. Un feuillard ou une tôle d'acier de haute résistance laminé à froid et recuit en continu, présentant une bonne aptitude à l'emboutissage profond, et comprenant, en pourcentage de poids :
• C: 0.01 à 0.05%;
• Mn: 1.0 à 3.0%;
• Cr: 0.005 à 1.0%;
• P: 0.005 à 0.1%;
• Al_sol: 0.01 à 1.0%;
• Si: 0.01 à 1.0%;
• Ti: 0.005 à 0.05%.
• B: 0.0005 à 0.005%;
• S: 0.03% ou moins;
• N: 0.002 à 0.01%;
• Cu: 0.8% ou moins;
• Ni: 0.8% ou moins;
dans lequel
a). -0.005% ≤ (Ti-(48/14)*N) ≤ 0.02%, et
b1). si (N-(14/48)*Ti) est positif, (0.005% ≤ C-(12/93)*Nb ≤ 0.03%) ET (0.0005% ≤ B-(11/14)*(N-(14/48)*Ti) ≤ 0.005%); ou
b2). si (N-(14/48)*Ti) est négatif, 0.005% ≤ C-(12/93)*Nb-(12/48)*(Ti-(48/14)*N-(96/32)*S) ≤ 0.03%;
l'acier comprenant également un ou plusieurs des suivants :
• Nb: 0.01 à 0.2%;
• Mo: 0.2 à 0.5%;
• V: 0.01 à 0.25%;
l'acier comprenant également, en option :
• Ca: 0.0005 à 0.01%;
le restant étant du Fe et les impuretés inévitables.

2. Feuillard ou tôle d'acier selon la revendication 1, le titane étant compris entre 0.005 et 0.03%.

3. Feuillard ou tôle d'acier selon la revendication 1 ou 2, la microstructure étant exempte de perlite, et la microstructure comprenant de la ferrite en phase matricielle, et une ou plusieurs deuxièmes phases, comme la martensite, l'austénite résiduelle et/ou la bainite.

4. Feuillard ou tôle d'acier selon une quelconque des revendications précédentes, avec au plus 0.005% (50 ppm) d'azote.

5. Feuillard ou tôle d'acier selon une quelconque des revendications précédentes, avec une résistance à la traction d'au moins 450 MPa, et, de préférence, d'au moins 500 MPa.

6. Feuillard ou tôle d'acier selon une quelconque des revendications précédentes, avec une valeur r moyenne supérieure à 1.2, et, de préférence, supérieure à 1.25.

7. Produit d'acier réalisé par formage ou estampage du feuillard ou de la tôle d'acier selon une quelconque des revendications 1 à 6, dans une forme appropriée pour une application dans la production d'automobiles.

8. Méthode de production de feuillard ou tôle d'acier de haute résistance laminé à froid et recuit en continu, avec une microstructure ferritique en tant que matrice, et de la martensite et/ou de la bainite comme deuxième(s) phase(s) présentant une bonne aptitude à l'emboutissage profond, et comprenant les étapes suivantes :
la fourniture d'une brame ou d'un épais feuillard d'acier par :
o coulée continue, ou
o coulée de brames minces, ou
o coulée continue de bandes sans fin, ou
o coulée continue de bandes ;
l'acier comprenant, en pourcentage de poids :
• C: 0.01 à 0.05%;
• Mn: 1.0 à 3.0%;
• Cr: 0.005 à 1.0%;
• P: 0.005 à 0.1%;
• Al_sol: 0.01 à 1.0%;
• Si: 0.01 à 1.0%;
• Ti: 0.005 à 0.05%.
• B: 0.0005 à 0.005%;
• S: 0.03% ou moins;
• N: 0.002 à 0.01%;
• Cu: 0.8% ou moins;
• Ni: 0.8% ou moins;
dans lequel
a). -0.005% ≤ (Ti-(48/14)*N) ≤ 0.02%, et
b1). si (N-(14/48)*Ti) est positif, (0.005% ≤ C-(12/93)*Nb ≤ 0.03%) ET (0.0005% ≤ B-(11/14)*(N-(14/48)*Ti) ≤ 0.005%); ou
b2). si (N-(14/48)*Ti) est négatif, 0.005% ≤ C-(12/93)*Nb-(12/48)*(Ti-(48/14)*N-(96/32)*S) ≤ 0.03%;
l'acier comprenant également un ou plusieurs des suivants :
• Nb: 0.01 à 0.2%;
• Mo: 0.2 à 0.5%;
• V: 0.01 à 0.25%;
l'acier comprenant également en option
• Ca: 0.0005 à 0.01%;
le restant étant du Fe et des impuretés inévitables ;
• suivie, en option, par le réchauffage de la brame ou du feuillard d'acier à une température de réchauffage maximale de 1250°C ;
• laminage à chaud d'une brame ou d'un épais feuillard pour obtenir un feuillard d'acier laminé à chaud, et finissage du procédé de laminage à chaud à une température de finissage supérieure à la température Ar₃ de l'acier ;
• bobinage du feuillard d'acier laminé à chaud à une température de bobinage comprise entre 500 and 750°C ;
• laminage à froid du feuillard d'acier laminé à chaud à une réduction de laminage à froid comprise entre 40 et 90% pour produire un feuillard laminé à froid ;
• recuit du feuillard d'acier laminé à froid à l'aide d'un procédé de recuit en continu à une température de pointe comprise entre Ac₁ et Ac₃, maintien du feuillard entre Ac₁ et Ac₃ pendant, au plus, 600 secondes, afin d'obtenir une microstructure comprenant au plus 80% d'austénite, suivi d'un refroidissement, depuis la température de maintien, à une température intermédiaire de 350-500°C à une vitesse de refroidissement (CR1) supérieure à la vitesse de refroidissement critique, et suivi
a. d'un refroidissement sans délai de la température intermédiaire à une température comprise entre la température ambiante et 200°C, à une vitesse de refroidissement (CR2) supérieure à la vitesse de refroidissement critique, ou
b. du maintien du feuillard à la température intermédiaire comprise entre 350 et 500°C pendant une période ne dépassant pas 600 secondes, suivi d'un refroidissement à une température entre la température ambiante et 200°C, à une vitesse de refroidissement (CR3) supérieure à la vitesse de refroidissement critique ;
la microstructure finale du feuillard après le recuit en continu étant une microstructure comprenant de la ferrite comme phase matricielle, et une ou plusieurs deuxièmes phases, comme la martensite, l'austénite résiduelle et/ou la bainite, et la microstructure finale étant exempte de perlite.

9. Méthode selon la revendication 8, l'acier comprenant de 0.005 à 0.03% de titane.

10. Méthode selon la revendication 8 ou 9, la vitesse de refroidissement de la température de maintien à la température intermédiaire (CR1) et/ou la vitesse de refroidissement (CR2 ou CR3) de la température intermédiaire à la température située entre la température ambiante et 200°C étant comprise entre 1 et 100°C/s.

11. Méthode selon une quelconque des revendications 8 à 10, la vitesse de chauffage à la température de maintien, au cours du recuit inter-critique, étant comprise entre 1 et 40°C/s.

12. Méthode selon une quelconque des revendications 8 à 11, le feuillard recuit de façon inter-critique étant doté d'un revêtement métallique par immersion à chaud du feuillard à recuit inter-critique ou galvanisation électrolytique.

13. Méthode selon une quelconque des revendications 8 à 12, la température de finissage pour le laminage à chaud étant au moins Ar₃+20°C.

14. Méthode selon une quelconque des revendications 8 à 13, le feuillard laminé à froid après le maintien à la température de maintien, au cours du recuit inter-critique, est refroidi à la température intermédiaire comprise entre 350 et 500°C, à une vitesse de refroidissement (CR1) comprise entre 1 et 100°C/s.

15. Méthode selon une quelconque des revendications 8 à 14, dans laquelle :
a. le feuillard laminé à froid après le recuit inter-critique est refroidi de la température intermédiaire à la température ambiante sans délai, de préférence à une vitesse de refroidissement (CR2) entre 1 et 100°C/s, ou
b. le feuillard laminé à froid après le recuit inter-critique est maintenu à la température intermédiaire pendant une période d'au plus 600 secondes, puis refroidi de la température intermédiaire à la température ambiante, de préférence à une vitesse de refroidissement (CR3) entre 1 et 100°C/s.
